# EUROPEAN PATENT SPECIFICATION

(11) **EP 2 989 247 B1**
(45) Date of publication and mention of the grant of the patent: **16.05.2018**
(21) Application number: 14788480.3
(22) Date of filing: 22.04.2014
(51) Int. Cl.: D21H 11/18, D21H 17/37, C08B 11/15, D21H 11/20, D21H 17/55

(54) **PROCESS FOR TREATING CELLULOSE FIBRES IN ORDER TO PRODUCE A COMPOSITION COMPRISING MICROFIBRILLATED CELLULOSE AND A COMPOSITION PRODUCED ACCORDING TO THE PROCESS**
VERFAHREN ZUR BEHANDLUNG VON CELLULOSEFASERN ZUR HERSTELLUNG EINER ZUSAMMENSETZUNG MIT MIKROFIBRILLIERTER CELLULOSE UND NACH DEM VERFAHREN HERGESTELLTE ZUSAMMENSETZUNG
PROCÉDÉ DE TRAITEMENT DE FIBRES DE CELLULOSE AFIN DE PRODUIRE UNE COMPOSITION COMPRENANT DE LA CELLULOSE MICROFIBRILLÉE ET COMPOSITION PRODUITE SELON LE PROCÉDÉ

(30) Priority: 25.04.2013 SE 1350512
(43) Date of publication of application: 02.03.2016
(73) Proprietor: Stora Enso Oyj, 00101 Helsinki (FI)
(72) Inventor: HEISKANEN, Isto, FI-55100 Imatra (FI); SAUKKONEN, Esa, FI-53850 Lappeenranta (FI); BACKFOLK, Kaj, FI-53130 Lappeenranta (FI); KAUPPI, Anna, FI-53300 Lappeenranta (FI); SAXELL, Heidi, FI-01360 Vantaa (FI); LYYTIKÄINEN, Katja, 55700 Imatra (FI)
(74) Representative: Steinrud, Henrik
(86) International application number: PCT/IB2014/060890
(87) International publication number: WO 2014/174429

(56) References cited:
- EP-A1- 2 216 345
- WO-A1-2010/092239
- WO-A1-2011/004301
- JP-A- 2012 180 602
- YAN, H ET AL.: 'Some ways to decrease fibre suspension flocculation and improve sheet formation' NORDIC PULP AND PAPER RESEARCH JOURNAL (NPPRJ vol. 21, no. 1, 2006, pages 36 - 43, XP055288895
- LEE, P F ET AL.: 'Effects of high molecular mass anionic polymers on paper sheet formation' NORDIC PULP AND PAPER RESEARCH JOURNAL (NPPRJ vol. 4, no. 2, 1989, pages 61 - 70, XP008181333
- WASSER, R. B: 'An evaluation of chemical additives for dispersing long-fibered pulps' TAPPI JOURNAL vol. 61, no. 11, 1978, pages 115 - 118, XP008181334

## Description

### Field of the invention

The present invention relates to a process for producing a composition comprising microfibrillated cellulose by mechanically treating cellulose fibres in the presence of anionic polyacrylamide. The invention further relates to a composition produced according to the process.

### Background

Microfibrillated cellulose (MFC) is a material made from wood cellulose fibres, where the individual microfibrils or microfibrillated aggregates have been partly or totally detached from each other. MFC is normally very thin (∼20 nm) and the length is often between 100 nm to 1 µm.

Microfibrillated cellulose can be produced in a number of different ways. It is possible to mechanically treat cellulose fibres so that microfibrils are formed. However, it is very energy consuming to for example, shred or refine untreated cellulose fibres in order to form microfibrillated cellulose and it is therefore not often used. Combination of mechanical and chemical treatment can also be used. Examples of chemicals that can be used are those that either modifies the cellulose fibers through a chemical reaction or those that modifies the cellulose fibers via e.g. grafting or sorption of chemicals onto/into the fibers. By introducing carboxylic acid groups onto/into the fibers or for example the use of TEMPO, which oxidizes the fibers, an improved fibrillation is obtained. However, the use of chemicals that oxidizes or introduces anionic groups might be limited due to legislation, costs or health / safety risks, which is particularly important in paperboard. This is due to legislation that prevents the use of these chemicals in for example food board or liquid packaging board.

In US5,964,983 a method is disclosed that teaches the introduction of charges or charging of the primary fiber wall with uronic acids such as galactouronic acids or glucoronic acids, which results in that improved MFC is obtained.

Another way to reduce the energy during mechanical treatment of cellulose fibers in order to form microfibrillated cellulose is to add optical brightening agents (OBA) prior to the fibrillation step. OBA has shown to improve the runnability of the mechanical equipment during production of microfibrillated cellulose. However, OBA can normally not be used in paperboard products since it is not an approved additive in food applications, i.e. it is not approved by the Food and Drug Administration (FDA).

One example of production of microfibrillated cellulose is described in WO2011051882A1. Cellulose fibers are mechanically treated in an extruder in order to form microfibrillated cellulose. It is also possible to add chemicals, e.g. CMC to the extruder in order to produce modified microfibrillated cellulose.

However, there is still a need for an improved process for the production of microfibrillated cellulose.

### Summary of the invention

It is an object of the present invention to provide a process for production of a composition comprising microfibrillated cellulose in an improved and energy efficient way.

Another object of the present invention is to produce a composition comprising microfibrillated cellulose with high negative charge.

These objects and other advantages are achieved by the process according to claim 1. By adding anionic polyacrylamide to a slurry comprising cellulose fibers it has been shown that it is possible to mechanically treat the slurry in order to produce a composition comprising microfibrillated cellulose in a very efficient way. This is achieved by the independent claim and preferred embodiments of the process are defined in the dependent claims.

The invention relates to a process for treating cellulose fibres which process comprises the steps of providing a slurry comprising cellulose fibers, adding anionic polyacrylamide (A-PAM) with high molar mass to the slurry in a first step, subjecting the slurry to a mechanical treatment in a second step thereby forming a composition comprising microfibrillated cellulose. By mechanically treating a slurry comprising A-PAM with high molar mass and cellulose fibers it is possible to produce a composition comprising microfibrillated cellulose in a much more energy efficient way. It has been shown that anionic polyacrylamide with a high molar mass will improve the fibrillation of the cellulose fibers.

The molar mass of the A-PAM added is above 10 x 10⁶ g/mol. It has been shown that A-PAM with a molar masse below 10 x 10⁶ g/mol will have no or small effect of the fibrillation and runnability of the mechanical treatment of the cellulose fibers.
The charge of the added A-PAM preferably is below -1,5 mekv/g. It has been shown that A-PAM with a negative charge of below -1,5 mekv/g further will improve the fibrillation of the cellulose fibers.

The amount of A-PAM added to the slurry is preferably between 150-2500 g/t (grams per ton) of dried MFC. The needed amount of A-PAM added to the slurry depends on the mechanical treatment as well as on the cellulose fibers treated.

The temperature of the slurry comprising fibers and A-PAM is preferably increased to above 50 °C. By increasing the temperature of the slurry comprising cellulose fibers and A-PAM it has been shown that the amount of A-PAM absorbed onto the fibers is increased.

It is also possible to add an electrolyte to the slurry. The electrolyte preferable has monovalent, divalent or multivalent cations, such as sodium sulphate or calcium chloride. By adding an electrolyte to the slurry comprising cellulose fibers and A-PAM it is possible to decrease the anionic charge of the fibers and thus increase the absorption of A-PAM onto the fibers.

The electrolyte concentration of the slurry is preferably between 0.0001-0.5 M. The desired concentration depends on the cellulose material as well as on the A-PAM used.

It is also possible to add a fixating chemical, such as dye or optical brightening agent, to the slurry. It is thus possible to modify the added A-PAM in such a way that absorption of the A-PAM onto the fibers is increased.

The cellulose fibers in the slurry are preferably pre-treated before addition of anionic polyacrylamide. The pre-treatment can be mechanical, chemical and/or enzymatic.

The slurry is preferably mechanically treated in a high shear mechanical equipment. It has been shown that the runnability of equipment that subjects the slurry comprising MFC and A-PAM to high shear rates, such as a fluidizer or a homogenizator, is improved when cellulose fibers are mixed with A-PAM before the mechanical treatment.

The slurry preferably has a consistency of between 1-40% by weight during the mechanical treatment. Since the addition of anionic polyacrylamide will increase the charge of the fiber suspensions, the fibers tend to deflocculate which makes it possible to increase the consistency of the slurry and still be able to produce a composition comprising microfibrillated cellulose in an efficient way.

The process may further comprise addition of anionic polyacrylamide (A-PAM) with high molar mass to the slurry in a third step and subjecting the slurry comprising fibers and A-PAM to a mechanical treatment in a fourth step thereby forming a composition comprising microfibrillated cellulose. It is thus possible to add anionic polyacrylamide in more than one step to the slurry and it is preferred to subject the slurry to a mechanical treatment after each addition of A-PAM.

The present invention further relates to a composition comprising microfibrillated cellulose and A-PAM with high molar mass produced according to the process described above. Due to the addition of anionic polyacrylamide during the production of microfibrillated cellulose the produced composition comprising microfibrillated cellulose will show increased negative charge which will improve the stability of the composition.

### Detailed description

It has been shown that it is possible to produce a composition comprising microfibrillated cellulose in a very energy efficient way by mechanically treat cellulose fibers in the presence of anionic polyacrylamide.

### Definition of microfibrillated cellulose

The microfibrillated cellulose (MFC) is also known as nanocellulose. It is a material typically made from wood cellulose fibers, both from hardwood or softwood fibers. It can also be made from microbial sources, agricultural fibers such as wheat straw pulp, bamboo or other non-wood fiber sources. In microfibrillated cellulose the individual microfibrils have been partly or totally detached from each other. A microfibrillated cellulose fibril is normally very thin (∼20 nm) and the length is often between 100 nm to 10 µm. However, the microfibrils may also be longer, for example between 10-200 µm, but even lengths of 2000 µm can be found due to wide length distribution. Fibers that has been fibrillated and which have microfibrils on the surface and microfibrils that are separated and located in a water phase of a slurry are included in the definition MFC.

Furthermore, cellulose whiskers, microcrystalline cellulose (MCC), microcellulose (MC), microdenomimated cellulose, nanocrystalline cellulose (NCC) or fibrillated regenerated cellulose fibers and particles are also included in the definition MFC.

The fibrils may also be polymer coated fibrils, i.e. a modified fibril either chemically or physically.

The invention relates to a process for treating cellulose fibres which process comprises the steps of providing a slurry comprising cellulose fibers, adding anionic polyacrylamide (A-PAM) to the slurry in a first step and subjecting the slurry comprising fibers and A-PAM to a mechanical treatment in a second step in which a composition comprising microfibrillated cellulose and A-PAM is formed. By mechanically treating a slurry comprising A-PAM and cellulose fibers it is possible to produce a composition comprising microfibrillated cellulose in a much more energy efficient way. This is due to that the presence of anionic polyacrylamide will improve the fibrillation and also the runnability of the mechanical equipment used. A-PAM has been shown to increase the charge of the composition, to reduce the friction between the fibers as well as to reduce the friction between the mechanical equipment used and the fibers, which will make it easier to fibrillate the fibers and also to improve the runnability of the equipment. Furthermore, A-PAM is a very cost efficient chemical and it is non-toxic which makes it possible to use for food based packaging materials, such as in food board and liquid packaging board.

Anionic polyacrylamide is added to the slurry comprising cellulose fibers and the anionic polyacrylamide is thereafter mixed with the slurry comprising cellulose fibers. It is preferred that the mixing is done for at least 2 minutes. The mixing of the cellulose fibers and the A-PAM is done in order to ensure that the components of the slurry are well dispersed before the mechanical treatment. It is possible to add the A-PAM by the use of high sped mixers, extruders or spraying equipment etc in order to ensure that the A-PAM and the cellulose fibers are well mixed. This is especially important if small amounts of A-PAM are added.

Since cellulose fibers normally are of negative charge it is only expected that small amounts of the added anionic polyacrylamide are adsorbed by the fibers. Depending on the added amount of A-PAM, the amount of A-PAM in free form in the slurry can be controlled.
It may however be desirable to increase the amount of A-PAM being absorbed by the fibers. This can be done in many different ways, for example by adjusting the temperature, by addition of an electrolyte, by addition of fixating chemicals and/or by altering the pH of the slurry.

The temperature of the slurry comprising fibers and A-PAM is preferably increased to above 50°C, preferably above 75 °C and even more preferred above 100 °C. By increasing the temperature of the slurry comprising cellulose fibers and A-PAM it has been shown that the amount of A-PAM absorbed onto the fibers is increased. It is believed that the increased temperature modifies the fibers so that its affinity towards A-PAM is increased and a higher amount of A-PAM could be absorbed onto the fibers.

It is also possible to add an electrolyte to the slurry. The electrolyte preferable has monovalent, divalent or multivalent cations, such as sodium sulphate or calcium chloride. By adding an electrolyte to the slurry comprising cellulose fibers and A-PAM it is possible to decrease the anionic charge of the fibers and thus increase the absorption of A-PAM onto the fibers. The electrolyte concentration of the slurry is preferably between 0.0001-0.5 M, preferably between 0.001-0.4 M, whereas the final concentration depends on the valency and type of the ions. The desired concentration depends on the cellulose material as well as on the A-PAM used.

It is also possible to add a fixating chemical, such as dye or optical brightening agent, to the slurry. By addition of a fixating chemical it is possible to modify the added A-PAM in such a way that absorption of the A-PAM onto the fibers is increased.

It could also be possible to change the charge density or molecular structure of the added A-PAM in order to enhance the adsorption of A-PAM onto the fibers.

The molar mass of A-PAM is above 10 x 10⁶ g/mol, preferably above 12 x 10⁶ g/mol or even more preferred above 15 x 10⁶ g/mol. It was surprisingly found that anionic polyacrylamide with a high molar mass improved the runnability of the mechanical treatment of fibers in order to produce MFC. It was expected that anionic polyacrylamide with short polymer chains, i.e. A-PAM with low molar mass, would work as a dispersion agent and thus improve the runnability whereas it was expected that anionic polyacrylamide with long polymer chains, i.e. A-PAM with high molar mass, would work as a flocculant and thus decrease the runnability. However, it was found that the A-PAM with long polymer chains, i.e. with a high molar mass, worked even better than A-PAM with short polymer chains when it was added to cellulose fibers which thereafter were mechanically treated.

The A-PAM added to the slurry can be linear and/or branched. It is preferred to use A-PAM with long polymer chains. However, amounts of A-PAM with shorter polymer chains, i.e. with lower molar mass, may also be present thus providing a solution with polydisperse molar mass distribution or e.g. bimodal size distribution. If branched A-PAM is used, the polymer chains can be shorter but the molar mass of the branched A-PAM is still high. The molar mass of the added A-PAM can be determined by any known method. It also possible to use modified A-PAM, e.g. A-PAM that contains other functional groups such as amphoteric or hydrophobically modified A-PAM. By anionic A-PAM it is also included amphoteric A-PAM, such as copolymer type amphoteric A-PAM which comprises both anionic and cationic charges.
The charge of the added A-PAM is preferably below -1,5 mekv/g. It has been shown that A-PAM with a negative charge further will improve the fibrillation of the cellulose fibers. The charge can be determined by any known method.

The amount of A-PAM added to the slurry is preferably between 150-2500 g/t of dried MFC, preferably between 800-1500 g/t of dried MFC. The needed amount of A-PAM added to the slurry depends on the mechanical treatment as well as on the cellulose fibers of the slurry. However, depending of the end use of the composition comprising MFC and A-PAM higher dosage of A-PAM could be necessary. If the composition should be used for strength enhancement, amounts of between 5-50 kg/t, preferably between 5-15 kg/t could be used.

The cellulose fibers in the slurry are preferably pre-treated before addition of anionic polyacrylamide. The pre-treatment can be mechanical, chemical and/or enzymatic. It may be more energy efficient to treat pre-treated fibers according to the invention.

The slurry comprising cellulose fibers and A-PAM is preferably mechanically treated in a high shear rate mechanical equipment, e.g. a fluidizer, homogenizator, extruder, e.g. conical extruders, high shear refiner, high shear fibrilator e.g. cavitron rotor/stator system or any other equipment subjecting the slurry to high shear rates. The nozzles or slots of the high shear rate mechanical equipment normally have a high tendency to be stopped up, i.e. they get blocked by the treated fibers. However, the addition of A-PAM to the slurry comprising the fibers to be treated in the high shear rate mechanical equipment reduces the tendency of blocking or clogging the nozzles and/or slots and the runnability of the high shear rate mechanical equipment is improved. However, it is also possible to use other mechanical equipment such as refiner, defibrator, beater, friction grinder, disperger or other known mechanical fibre treatment apparatus.

It may be preferred to mechanically treat the slurry comprising fibers and A-PAM in more than one step, i.e. to run the slurry through a mechanical equipment more than one time, preferably two, three or more times, in order to produce a composition comprising microfibrillated cellulose.

The slurry preferably has a consistency of between 1-40% by weight, preferably between 1-5% by weight, during the mechanical treatment. Since the addition of anionic polyacrylamide will increase the charge of the fiber suspension, the fibers tend to deflocculate which makes it possible to increase the consistency of the slurry and still be able to produce a composition comprising microfibrillated cellulose in an efficient way. The consistency of the produced composition comprising microfibrillated cellulose will thus also have a higher consistency. It is thus possible to produce a composition comprising MFC with high consistency which will facilitate transportation of the composition to the site of usage.

The process may further comprise addition of anionic polyacrylamide (A-PAM) with high molar mass to the slurry in a third step and subjecting the slurry comprising fibers and A-PAM to a mechanical treatment in a fourth step thereby forming a composition comprising microfibrillated cellulose. It is thus possible to add anionic polyacrylamide in more than one step to the slurry and it is preferred to subject the slurry to a mechanical treatment after each addition of A-PAM. It is also possible to add A-PAM with high molar mass to the slurry in more than two steps, e.g. three, four or more steps. It is thus also possible to mechanically treat the slurry comprising cellulose fibers and A-PAM in more than two steps, e.g. three, four or more steps. The amount of A-PAM added in each step depends on the mechanical treatment, i.e. equipment used, conditions of the mechanical treatments as well on the fibers being treated. The total amount of A-PAM added to the slurry should be between 150-2500 g/t of dried MFC. It may be preferred to add a small amount of A-PAM in the first step before the first mechanical treatment followed by addition of a larger amount of A-PAM in the third step before the second mechanical treatment.

The present invention further relates to a composition comprising microfibrillated cellulose and A-PAM with high molar mass produced according to the process described above. Due to the addition of anionic polyacrylamide during the production of microfibrillated cellulose the produced composition will have increased negative charge. The increase of negative charge of the composition comprising MFC will both give the composition a higher cationic demand and an improved retention in papermaking processes. The presence of A-PAM in the composition will also reduce the flocculation of the produced MFC which will improve the ability of the MFC to mix with other materials and additives.

It could be possible to use the produced composition comprising MFC and A-PAM as an additive in paper or board production. A-PAM is known to increase the dry strength of for example paper or board. However, it is normally not easy to mix MFC and A-PAM before addition to, e.g. the wet end, of a paper or board machine. An advantage with the present invention is that it is possible to produce a stable composition comprising both MFC and A-PAM which thus also can be used as an additive to increase the strength of a paper or board.

It could also be possible to use the composition comprising MFC and A-PAM as a viscosity control additive in for example ketchup or cement. The viscosity properties of the MFC of the composition are more stable compared to MFC compositions with no A-PAM. This is due to that the A-PAM will work as a deflocculating agent of the microfibrils of MFC.

An advantage with the composition according to the invention is that the added A-PAM could be in free form in the composition, i.e. the microfibrillated cellulose of the composition has not adsorbed all of the added A-PAM, i.e. the MFC is not chemically modified. Consequently, it could be easier to get the MFC of the composition approved for example as a food additive.

It could also be possible to use the composition as a purification additive of waste waters. Furthermore, it could be possible to use the composition in any known end uses where MFC can be used where or A-PAM can be used.

The cellulose fibres used in the process according to the invention are preferably fibres of kraft pulp, i.e. they have been treated according to the kraft process. However, other chemical pulps, mechanical pulps or chemi-mechanical pulps can also be used, one example is sulphite pulp. The fibres can also be bleached or unbleached. The cellulose fibres may be hardwood and/or softwood fibres. It is also possible to use fibers from agricultural materials or regenerated cellulose fibers.

### Examples:

Pre-treated pulp with a consistency of 3% was used. Different kinds of anionic polyacrylamides in different amounts were added to the pulp slurry and thereafter subjected to mechanical treatment in a microfluidizer. As a reference sample, no A-PAM was added to the pulp slurry before it was treated in the microfluidizer.

The fiber suspension was first pre-treated with enzymes and then the anionic polyacrylamide was added to the suspension and mixed for 10 minutes (31 000 revs). After mixing, the samples were run three times through the Microfluidizer M-110EH-30 (Microfluidics Corp.) using a 400 and a 200 um chambers in the two first runs and then a 200/100 chambers in the final third run.

The chemicals used were different anionic polyacrylamides having different anionicity and molar masses (Fennopol A3092, Fennopol A302, and Fennopol A392, all products by Kemira).

The runnability is here defined as a clogging tendency of the fludizer which thus limits the operation at higher solid contents.

**Table1: shows runnability tests in a microfluidizer with and without addition of different types of anionic polyacrylamide**

| Sample | Type of A-PAM | Amount of A-PAM (g/t of dried MFC) | Molar mass A-PAM (g/mol) | Charge of A-PAM (mekv/g) | Runnability |
|---|---|---|---|---|---|
| Ref | | 0 | | | Poor |
| 1 | A3092 | 400 | 3-6 x 10⁶ | -6 | Poor |
| 2 | A302 | 150 | >15 x 10⁶ | -1,8 | Adequate |
| 3 | A302 | 400 | >15 x 10⁶ | -1,8 | Good |
| 4 | A302 | 800 | >15 x 10⁶ | -1,8 | Extremely Good |
| 5 | A392 | 150 | >15 x 10⁶ | -5,5 | Adequate |
| 6 | A392 | 400 | >15 x 10⁶ | -5,5 | Good |
| 7 | A392 | 800 | >15 x 10⁶ | -5,5 | Extremely Good |

The runnability of the microfluidizer was visually evaluated. Depending on the quantity of clogging of the nozzles of the microfluidizer, the runnability was graded as poor, adequate, good and extremely good. It can be seen from the test above that addition of A-PAM with high molar mass strongly improves the runnability of the microfluidizer.

## Claims

1. A process for treating cellulose fibres which process comprises:
- providing a slurry comprising cellulose fibers,
- adding anionic polyacrylamide (A-PAM) with a molar mass above 10 x 10⁶ g/mol to the slurry in a first step and
- subjecting the slurry comprising fibers and A-PAM to a mechanical treatment in a second step thereby forming a composition comprising microfibrillated cellulose.

2. The process according to any of the preceding claims wherein A-PAM has a charge of below -1,5 mekv/g.

3. The process according to any of the preceding claims wherein the amount of A-PAM added to the slurry is between 150-2500 g/t of dried MFC.

4. The process according to any of the preceding claims wherein the temperature of the slurry comprising fibers and A-PAM is increased to above 50°C.

5. The process according to any of the preceding claims wherein an electrolyte is added to the slurry.

6. The process according to claim 5 wherein the electrolyte concentration of the slurry is between 0.0001-0.5 M.

7. The process according to any of the preceding claims wherein a fixating chemical, such as dye or optical brightening agent, is added to the slurry.

8. The process according to any of the preceding claims wherein the cellulose fibers in the slurry are pre-treated before addition of anionic polyacrylamide.

9. The process according to any of the preceding claims wherein the slurry is mechanically treated in a high shear rate mechanical equipment.

10. The process according to any of the preceding claims wherein the slurry has a consistency of between 1-40% by weight during the mechanical treatment.

11. The process according to any of the preceding claims wherein the process further comprises:
- adding anionic polyacrylamide (A-PAM) with a molar mass above 10 x 10⁶ g/mol to the slurry in a third step and
- subjecting the slurry comprising fibers and A-PAM to a mechanical treatment in a fourth step thereby forming a composition comprising microfibrillated cellulose.

12. A composition comprising microfibrillated cellulose and A-PAM with high molar mass produced according to the process of any of the claims 1-11.

## Patentansprüche

1. Verfahren zum Behandeln von Cellulosefasern, wobei das Verfahren umfasst:
- Bereitstellen einer Aufschlämmung, die Cellulosefasern umfasst,
- Zugeben von anionischem Polyacrylamid (A-PAM) mit einer molaren Masse von mehr als 10 x 10⁶ g/mol zu der Aufschlämmung in einem ersten Schritt und
- Aussetzen der Aufschlämmung, die Cellulosefasern und A-PAM umfasst, einer mechanischem Behandlung in einem zweiten Schritt, wodurch eine Zusammensetzung gebildet wird, die mikrofibrillierte Cellulose umfasst.

2. Verfahren nach einem der vorhergehenden Ansprüche, wobei A-PAM eine Ladungsdichte von weniger als -1,5 mekv/g aufweist.

3. Verfahren nach einem der vorhergehenden Ansprüche, wobei die Menge von A-PAM, das der Aufschlämmung zugegeben wird, zwischen 150 und 2500 g/t getrockneter MFC beträgt.

4. Verfahren nach einem der vorhergehenden Ansprüche, wobei die Temperatur der Aufschlämmung, die Fasern und A-PAM umfasst, auf mehr als 50 °C erhöht wird.

5. Verfahren nach einem der vorhergehenden Ansprüche, wobei der Aufschlämmung ein Elektrolyt zugegeben wird.

6. Verfahren nach Anspruch 5, wobei die Elektrolytkonzentration der Aufschlämmung zwischen 0,0001 und 0,5 M beträgt.

7. Verfahren nach einem der vorhergehenden Ansprüche, wobei der Aufschlämmung eine Fixierungschemikalie, wie ein Farbstoff oder ein optisches Aufhellungsmittel, zugegeben wird.

8. Verfahren nach einem der vorhergehenden Ansprüche, wobei die Cellulosefasern in der Aufschlämmung vor Zugabe von anionischem Polyacrylamid vorbehandelt werden.

9. Verfahren nach einem der vorhergehenden Ansprüche, wobei die Aufschlämmung in einer mechanischen Einrichtung mit hoher Schergeschwindigkeit mechanisch behandelt wird.

10. Verfahren nach einem der vorhergehenden Ansprüche, wobei die Aufschlämmung während der mechanischen Behandlung eine Stoffdichte von 1 bis 40 Gew.-% aufweist.

11. Verfahren nach einem der vorhergehenden Ansprüche, wobei das Verfahren ferner umfasst:
- Zugeben von anionischem Polyacrylamid (A-PAM) mit einer molaren Masse von mehr als 10 x 10⁶ g/mol zu der Aufschlämmung in einem dritten Schritt und
- Aussetzen der Aufschlämmung, die Cellulosefasern und A-PAM umfasst, einer mechanischem Behandlung in einem vierten Schritt, wodurch eine Zusammensetzung gebildet wird, die mikrofibrillierte Cellulose umfasst.

12. Zusammensetzung, die mikrofibrillierte Cellulose und A-PAM mit hoher molarer Masse umfasst, hergestellt gemäß dem Verfahren nach einem der Ansprüche 1-11.

## Revendications

1. Procédé de traitement de fibres cellulosiques, lequel procédé comprend :
- la fourniture d'une bouillie comprenant des fibres cellulosiques,
- l'addition de polyacrylamide anionique (A-PAM) avec une masse molaire supérieure à 10 x 10⁶ g/mol à la bouillie dans une première étape et
- la soumission de la bouillie comprenant des fibres et du A-PAM à un traitement mécanique dans une deuxième étape formant ainsi une composition comprenant de la cellulose microfibrillée.

2. Procédé selon l'une quelconque des revendications précédentes, dans lequel l'A-PAM a une charge inférieure à -1,5 mekv/g.

3. Procédé selon l'une quelconque des revendications précédentes, dans lequel la quantité d'A-PAM ajoutée à la bouillie se trouve entre 150-2500 g/t de MFC séchée.

4. Procédé selon l'une quelconque des revendications précédentes, dans lequel la température de la bouillie comprenant des fibres et de l'A-PAM est augmentée au-dessus de 50 °C.

5. Procédé selon l'une quelconque des revendications précédentes, dans lequel un électrolyte est ajouté à la bouillie.

6. Procédé selon la revendication 5, dans lequel la concentration en électrolytes de la bouillie se trouve entre 0,0001-0,5 M.

7. Procédé selon l'une quelconque des revendications précédentes, dans lequel un produit chimique fixant, tel qu'un agent colorant ou un agent de blanchissement optique, est ajouté à la bouillie.

8. Procédé selon l'une quelconque des revendications précédentes, dans lequel les fibres de cellulose dans la bouillie subissent un prétraitement avant l'addition de polyacrylamide anionique.

9. Procédé selon l'une quelconque des revendications précédentes, dans lequel la bouillie est mécaniquement traitée dans un équipement mécanique à taux de cisaillement élevé.

10. Procédé selon l'une quelconque des revendications précédentes, dans lequel la bouillie a une consistance allant entre 1-40 % en poids pendant le traitement mécanique.

11. Procédé selon l'une quelconque des revendications précédentes, dans lequel le procédé comprend en outre :
- l'addition de polyacrylamide anionique (A-PAM) avec une masse molaire supérieure à 10 x 10⁶ g/mol à la bouillie dans une troisième étape et
la soumission de la bouillie comprenant des fibres et de l'A-PAM à un traitement mécanique dans une quatrième étape formant ainsi une composition comprenant de la cellulose microfibrillée.

12. Composition comprenant de la cellulose microfibrillée et de l'A-PAM avec une masse molaire élevée produite conformément au procédé selon l'une quelconque des revendications 1-11.
